# EUROPÄISCHE PATENTSCHRIFT

(11) **EP 1 478 486 B1**
(45) Veröffentlichungstag und Bekanntmachung des Hinweises auf die Patenterteilung: **20.12.2006**
(21) Anmeldenummer: 03714655.2
(22) Anmeldetag: 25.02.2003
(51) Int. Cl.: B23K 11/30, B23K 11/25, B23K 35/02, B06B 1/06, G01N 29/09, G01N 29/07

(54) **SCHWEISSELEKTRODE FÜR EIN WIDERSCHWEISSGERÄT MIT EINEM ULTRASCHALLPRÜFKOPF**
WELDING ELECTRODE FOR A RESISTANCE WELDING SYSTEM COMPRISING AN ULTRASOUND PROBE
ELECTRODE DE SOUDURE POUR UN APPAREIL DE SOUDAGE PAR RESISTANCE AVEC UNE TETE DE CONTROLE PAR ULTRASONS

(30) Priorität: 25.02.2002 DE 10207801
(43) Veröffentlichungstag der Anmeldung: 24.11.2004
(73) Patentinhaber: Vogt Werkstoffprüfsysteme GmbH, 30938 Burgwedel (DE)
(72) Erfinder: VOGT, Göran, 30938 Burgwedel (DE); MÖLLER, Olaf, 31303 Burgdorf OT Otze (DE)
(74) Vertreter: Körner, Peter
(86) Internationale Anmeldenummer: PCT/DE2003/000596
(87) Internationale Veröffentlichungsnummer: WO 2003/072295

(56) Entgegenhaltungen:
- EP-A- 0 284 177
- US-A- 3 242 723
- US-A- 3 394 586
- US-A- 3 771 117
- US-A- 4 596 143
- US-A- 4 918 990
- US-A- 5 329 821

## Beschreibung

Die Erfindung betrifft eine Schweißelektrode nach dem Oberbegriff des Patentanspruchs 1 (siehe, z.B., EP-A-0 284 177).

Prüfköpfe zum Senden und/oder Empfangen von Ultraschallsignalen in Schweißelektroden als Bestandteil eines Ultraschallprüfsystems dienen der Überwachung von Punktschweißungen während des Schweißprozesses. Zwei in die Schweißelektroden einer Schweißzange integrierte Prüfköpfe liefern Ultraschallsignalbilder im Durchschallungs- und/oder im Impulsecho-Betrieb. Ein Hallsensor oder ein Schweißstrominduktionssensor liefern einem Auswertegerät Informationen über die Schweißart sowie den benötigten Zeitpunkt des Schweißbeginns.

Während der gesamten Schweißung werden sowohl Impuls/Echo-Signale und Durchschallungssignale aufgenommen. Die Auswertung der Ultraschallinformationen erfolgt direkt in einem Rechner des Auswertegerätes. Das Ergebnis über die Qualität des Schweißpunktes in den Abstufungen "gut", "mittel/ kritisch", "schlecht" sowie eine Trendinformation bezüglich der Schweißspritzer wird einem Kommunikationsserver zur Weiterverarbeitung weitergeleitet.

Um eine möglichst exakte Bestimmung der Schweißpunktqualität zu erreichen sind klare, störungs- sowie überlagerungsfreie Ultraschallsignale bei der Durchschallung sowie im Impuls/Echo-Betrieb unabdingbar. Hierbei dürfen Einflüsse aus der unmittelbaren Umgebung, wie auch Gegebenheiten in dem Elektrodenschaft keine Beeinflussung zeigen. Desweiteren sollte der Einsatz der Prüfköpfe nicht zur Vergrößerung der äußeren räumlichen Abmessungen des Schaftes führen, da so die Verwendbarkeit der Schweißzange bei komplizierter geformten Bauteilen eingeschränkt würde.

Aus der US-A-4 918 990 und der EP-A-0 284 177 sind Schweißelektroden eines Widerstandsschweißgerätes bekannt, die einen Prüfkopf zum Senden und/oder Empfangen von Ultraschallsignalen enthalten. Der Prüfkopf befindet sich in der Schweißkappe und ist durch eine Feder unmittelbar an den Schweißkappengrund angedrückt.

Bei der EP-A-0 284 177 ist zusätzlich ein Kühlwasserkreislauf dargestellt. Das Kuhlwasser fließt über ein zentrales Röhrchen zu, tangiert die dem Schweißkappengrund abgewandte Stirnseite des Prüfkopfes und fließt durch einen Ringraum zwischen dem Röhrchen und dem Schaft der Schweißelektrode wieder zurück.

Aus der US-A-3 771 117 ist eine Ultraschall-Messanordnung zur Messung der Strömungsgeschwindigkeit von Flüssigkeiten mittels des Doppler-Effektes bekannt. In einem Gehäuse befindet sich ein Ultraschall-Wandlerelement, das über ein elastisches Material mit einem akustischen Fenster in einer Stirnfläche des Gehäuses gekoppelt ist und Ultraschallsignale in die Flüssigkeit überträgt oder aus der Flüssigkeit empfängt.

Der Erfindung liegt die Aufgabe zugrunde, bei einer Schweißelektrode der eingangs genannten Art die Ultraschallkoppelung zwischen dem Prüfkopf und der Schweißkappe bei geringer Baugröße zu verbessern und störende Beeinflussungen zu verringern.

Diese Aufgabe wird bei einer Schweißelektrode nach dem Oberbegriff des Anspruchs 1 durch die Merkmale dieses Anspruchs gelöst.

Weiterbildungen und vorteilhafte Ausgestaltungen ergeben sich aus den Unteransprüchen.

Die verwendeten Prüfköpfe werden so nah wie möglich zum Prüfobjekt, dem Schweißpunkt, platziert, so dass die Strecke zwischen den beiden Prüfköpfen ein Minimum annimmt. Hierbei finden die beiden Prüfköpfe in den Elektrodenschäften der Schweißzange Platz. Sie bilden die Verlängerung der Kühlwasserröhrchen, die zur Leitung des Kühlwassers zu den Schweißkappen dienen. Um eine Überhitzung der Köpfe zu vermeiden, werden diese permanent mit dem Kappenkühlwasser umspült. Zur Ankopplung der Köpfe an die Kappen, dient nicht das zur Kühlung verwendete Wasser, sondern ein spezielles Kissen, welches am Prüfkopf befestigt ist.

Wie der gesamte Prüfkopf wird auch das Kissen mit Kühlwasser umspült. Der für eine Ankopplung nötige Anpressdruck des Kissens an den Kappengrund erfolgt über die elastische Verformung des Kissens beim Aufsetzen der Kappen und/oder über ein am Prüfkopfhalter integriertes Federelement. Das Kissen hat im nicht eingebauten Zustand eine größere Länge als der Abstand zwischen Schallaustrittsfläche am Prüfkopf und dem Kappengrund im montierten Zustand. Geringe fertigungsbedingte Änderungen des Kappengrunds werden hierdurch ebenfalls ausgeglichen. Der Verschiebeweg der Kappen auf dem am Schaft befindlichen Konus, wird durch das genannte Federelement abgefangen. Der eigentliche Prüfkopf wird von dem Prüfkopfhalter im Bohrungsbereich des Konus gehalten. Das Prüfkopfgehäuse liegt an keiner Stelle der Bohrungswandung in dem genannten Bereich an, sodass eine Verjüngung des Bohrungsdurchmessers aufgrund der Kappenpressung auf dem Konus, diesen nicht einklemmen kann.

Die Signalleitung, die den Prüfkopf mit dem Auswertegerät verbindet, verläuft hierbei durch das Kühlwasserröhrchen bis zum Elektrodenschafthalter oder kann weiter durch den Kühlwasserkanal des gesamten Zangenarms verlegt werden.

Optional besteht auch die Möglichkeit mittels einer Steckverbindung die Leitung kurz hinter dem Prüfkopfgehäuse aus dem Elektrodenschaft herauszuführen.

Gemäß der Erfindung, Aufgrund des einfachen Aufbaus ist, der Prüfkopf inklusive des Kissens so miniaturisiert, dass die äußeren Abmessungen des Elektrodenschaftes sowie der Schweißkappen beibehalten werden können.

Durch den erfindungsgemäßen Aufbau werden folgende Vorteile erzielt:

Es wird eine senkrechte, gezielte Einleitung des Ultraschalls in die Schweißkappe erreicht, wobei der Einschallpunkt über die Stellung des Kopfes im Schaft verändert werden kann. Es ist somit auch möglich, den Schall dezentral in die Schweißkappe einzuleiten, was Vorteile bei der Verwendung von nicht rotationssymetrischen Schweißkappen mit sich bringt.

Ferner wird aufgrund des elastisch verformbaren Kissens eine gleichbleibende Ankopplung des Prüfkopfes an den Kappengrund erzielt. Wegen des Kissens entfällt die negative Beeinflussung des fließenden Kühlwassers auf das Ultraschallsignal bei der bisher üblichen Wasserankopplung.

Die äußeren Abmessungen sowie die Gestaltung der Elektrodenschäfte können aufgrund der Miniaturisierung des Prüfkopfes beibehalten werden. Somit ist eine problemlose Integration in den Schaft möglich.

Einer eventuellen Beeinträchtigung der Kühlwasserdurchflussmenge kann, wenn gewünscht, mittels einer Ausgleichsbohrung entgegengewirkt werden.

Weiterhin wird eine einfache Adaption des Kopfes an den Kühlkreislauf erreicht. Der Aufbau ist so geschaffen, dass der Prüfkopf bei angepasster Länge des Kühlwasserröhrchens, nach Einführung des Kopfes in den Schaft, mit der Kühlwasserzuführung verbunden ist. Alternativ könnte der Kopf mit adaptierten Röhrchen gefertigt werden. Die gesamte Einheit könnte dann wie gewohnt über das am Kühlwasserröhrchen befindliche Gewinde im Kopf der Elektrodenpfeife, eingeschraubt werden.

Auch ergibt sich eine höhere Flexibilität bei der Installation in "exotisch" geformten Schäften. Aufgrund des kleinen Aufbaus können in der Regel alle Schäfte mit den Köpfen ausgestattet werden. Dieses beinhaltet auch kurz gebogene Schäfte.

Schließlich wird eine bessere Kabelführung vom Prüfkopf bis zu einer Schnittstelle zur Verbindung der Schweißzange mit dem Auswertegerät erreicht. Aufgrund des schon im Kühlkreislauf befindlichen Prüfkopfes ist es möglich, das feine Prüfkopfkabel durch die gesamte Kühlwasserzuführungsleitung zu verlegen. Die Gefahr der mechanischen Beschädigung der Kabel im kritischen Schweißbereich entfällt.

Nachfolgend wird die Erfindung anhand einer Zeichnung erläutert. In der Zeichnung zeigen:
- Fig. 1: einen schematischen Schnitt durch eine Schweißelektrode als Bestandteil einer Schweißzange mit zwei sich gegenüberstehenden Schweißelektroden und
- Fig. 2: eine Darstellung ähnlich Fig. 1, jedoch mit einem zusätzlichen Federelement im Prüfkopfhalter.

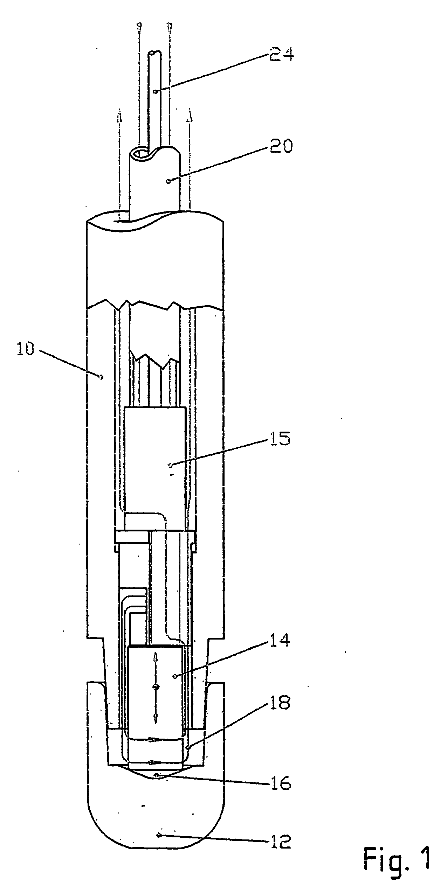

Fig. 1 zeigt einen schematischen Schnitt durch eine Schweißelektrode als Bestandteil einer Schweißzange mit zwei sich gegenüberstehenden Schweißelektroden, zwischen denen sich zwei zu verbindende Bleche befinden.

Die Schweißelektrode umfasst einen Schaft 10 und eine Schweißkappe 12, die in elektrisch leitenden Kontakt mit einem von zwei zu verbindenden Blechen gelangt.

Der Schaft 10 und die Schweißkappe 12 bilden einen hohlen Innenraum, in dem Kühlwasserleitungen mit Kühlwasserröhrchen 20 zur Erzeugung eines Kühlwasserkreislaufs innerhalb der Schweißelektrode angeordnet sind. Im Bereich der Schweißkappe 12 und benachbart zum Kappengrund befindet sich ein Prüfkopfhalter 15 und ein Prüfkopf 14 zum Senden und/oder Empfangen von Ultraschallsignalen, die in die Schweißkappe 12 eingekoppelt werden. Die Einkopplung erfolgt durch ein elastisch verformbares Kissen 16.

Sowohl der Prüfkopf 14 als auch das elastisch verformbare Kissen 16 liegen im Kühlwasserkreislauf und werden vom Kühlwasserstrom 18, wie er in der Zeichnung angedeutet ist, umströmt.

Die Signalleitung 24, welche den Prüfkopf 14 mit einem hier nicht dargestellten Auswertegerät verbinden, führen durch die Kühlwasserleitungen.

Es ist auch möglich, sie direkt in den kühlwasserführenden Kühlwasserröhrchen 20 unterzubringen oder in einem zentralen Kanal 24.

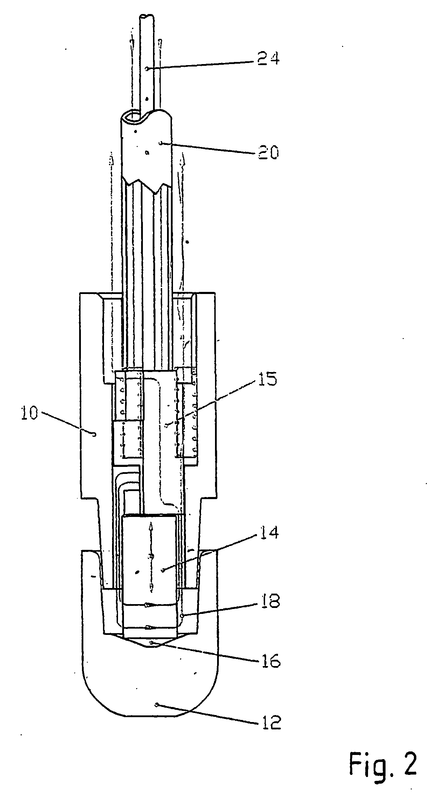

Bei der Ausführung gemäß Fig. 2 ist zusätzlich ein Federelement im Prüfkopfhalter 15 integriert, dass den Prüfkopf 14 oben zentriert und gegen das Koppelkissen 16 drückt.

## Patentansprüche

1. Schweißelektrode für eine Widerstandsschweißgerät, bestehend aus einem Schaft (10) mit einer Schweißkappe (12) sowie im Schaft (10) angeordneten Kühlwasserleitungen (20) und einem akustisch mit der Schweißkappe (12) gekoppelten Prüfkopf (14) zum Senden und/oder Empfangen von Ultraschallsignalen, wobei der Prüfkopf (14) über eine Signalleitung (24) mit einem Auswertegerät außerhalb der Schweißelektrode verbunden ist, wobei der Prüfkopf (14) in der Schweißkappe (12) angeordnet ist, **dadurch gekennzeichnet, dass**, der Prüfkopf (14) durch einen Prüfkopfhalter (15) gehaltert und zentriert ist und der Prüfkopf (14) mit der Schweißkappe (12) über ein elastisch verformbares Koppelkissen (16) gekoppelt ist und durch ein Federelement im Prüfkopfhalter (15) gegen die Schweißkappe (12) andrückbar ist, dass die Außenmaße des Prüfkopfes (14) und des Koppelkissens (16) kleiner als die Innenmaße eines Hohlraums im Schaft (10) sind und der Prüfkopf (14) und des Kissen (16) im Kühlwasserkreislauf angeordnet sind.

2. Schweißelektrode nach Anspruch 1, **dadurch gekennzeichnet, dass** der Prüfkopf (14) im Wesentlichen axial im Schaft (10) angeordnet ist, wobei der Einschallpunkt in die Schweißkappe (12) über die Stellung des Prüfkopfes (14) im Schaft (10) einstellbar ist.

3. Schweißelektrode nach Anspruch 1 oder 2, **dadurch gekennzeichnet, dass** die den Prüfkopf (14) mit dem Auswertegerät verbindenden Signalleitungen (22) durch die Kühlwasserleitungen (20) geführt sind.

## Claims

1. Welding electrode for a resistance welder comprising a shaft (10) with a weld cap (12) and coolant lines (20) arranged in the shaft (10), and with a test head (14) coupled acoustically with the weld cap (12) for sending and/or receiving ultrasound signals, wherein the test head (14) is connected via a signal line (24) with an analysis unit outside the welding electrode, wherein the test head (14) is arranged in the weld cap (12), **characterised in that** the test head (14) is held and centred by a test head holder (15) and the test head (14) is coupled with the weld cap (12) via an elastically deformable coupling cushion (16) and can be pressed against the weld cap (12) by a spring element in the test head holder (15), that the external dimensions of the test head (14) and the coupling cushion (16) are smaller than the internal dimensions of a cavity in the shaft (10), and the test head (14) and cushion (16) are arranged in the coolant circuit.

2. Welding electrode according to claim 1, **characterised in that** the test head (14) is arranged substantially axially in the shaft (10), wherein the acoustic irradiation point in the weld cap (12) can be adjusted via the position of the test head (14) in the shaft (10).

3. Welding electrode according to claim 1 or 2, **characterised in that** the signal lines (22) connecting the test head (14) with the analysis unit are guided through the coolant lines (20).

## Revendications

1. Electrode de soudure pour un appareil de soudage électrique par résistance, comprenant un corps (10) avec un chapeau de soudage (12), ainsi que des conduites d'eau de refroidissement (20) disposées dans le corps (10) et un palpeur (14), servant à envoyer et/ou à recevoir des signaux ultrasoniques, couplé acoustiquement au chapeau de soudage, le palpeur (14) étant relié via un circuit d'acheminement des signaux (24) à un appareil d'exploitation extérieur à l'électrode de soudure, le palpeur (14) étant disposé dans le chapeau de soudage (12), **caractérisé en ce que** le palpeur (14) est porté et centré par un porte-palpeur (15), qu'il est couplé au chapeau de soudage (12) via un coussin de couplage (16) pouvant être déformé élastiquement et qu'il peut être pressé contre le chapeau de soudage (12) par un élément ressort dans le porte-palpeur (15), **en ce que** les dimensions du palpeur (14) et du coussin de couplage (16) sont inférieures aux dimensions intérieures du creux dans le corps (10) et **en ce que** le palpeur (14) et le coussin (16) sont disposés dans les conduites d'eau de refroidissement.

2. Electrode de soudure suivant la revendication 1, **caractérisée en ce que** le palpeur (14) est disposé dans le corps (10) de manière essentiellement axiale, le point d'entrée des ultrasons dans le chapeau de soudage (12) est réglable par l'intermédiaire de la position du palpeur (14) dans le corps (10).

3. Electrode de soudure suivant la revendication 1 ou 2, **caractérisée en ce que** le circuit d'acheminement des signaux (22), qui relie le palpeur (14) à l'appareil d'exploitation, passe par les conduites d'eau de refroidissement (20).
